# EUROPEAN PATENT APPLICATION

(11) **EP 4 429 227 A1**
(43) Date of publication of application: **11.09.2024**
(21) Application number: 21963380.7
(22) Date of filing: 05.11.2021
(51) Int. Cl.: H04N 5/64, H04N 21/422, G06F 3/16, G09G 3/32, G09F 9/30

(54) **TV AND CONTROL METHOD THEREFOR**

(71) Applicant: LG Electronics Inc., Yeongdeungpo-gu Seoul 07336 (KR)
(72) Inventor: LEE, Jinhee, Seoul 06772 (KR); CHOI, Gowoon, Seoul 06772 (KR)
(74) Representative: Frenkel, Matthias Alexander
(86) International application number: PCT/KR2021/015994
(87) International publication number: WO 2023/080280

(57) **Abstract**

According to one embodiment of the present disclosure, a control method for a TV, of which the size exposed by a screen changes by means of a motor, comprises the steps of outputting content including audio data and/or video data in a state in which all or a part of the screen is covered by a cover including at least one light-emitting diode (LED); receiving user input data or event data from the outside; and controlling, on the basis of the received user input data or event data, the at least one LED arranged on the cover.

## Description

### TECHNICAL FIELD

The technical field of the present disclosure includes various multimedia devices having displays, etc. For example, it is applicable to a Television (TV) having a variable size of an exposed screen.

### BACKGROUND ART

In TV according to the related art, an entire area of a screen (screen) is always exposed. However, even when a user does not watch TV, there is a problem that the user may not fully utilize a space when a black screen is always exposed. Meanwhile, a service that uses only a partial area of a screen of a TV as a display is not provided.

In order to solve this problem, research is being conducted on a new form factor of TV.

### DISCLOSURE

### TECHNICAL TASKS

One technical task of the present disclosure is to provide a system that selectively allows a screen to be partially or fully exposed by using a motor or the like added to a TV.

Another technical task of the present disclosure is to provide a solution for adaptively displaying an option for controlling video or audio, which is displayed on a variable screen, on a fixed cover or the variable screen.

Further technical task of the present disclosure is to provide a separate database that defines a location, size, and direction in which the above-described option is displayed.

### TECHNICAL SOLUTIONS

In one technical aspect of the present disclosure, provided is a method of controlling a TV having an exposed size of a screen changed by a motor, the method including outputting a content containing at least one of audio data or video data while the screen is covered partially or fully by a cover having at least one Light Emitting Diode (LED), receiving user's input data or event data externally, and controlling the at least one LED arranged on the cover based on the received user's input data or event data.

In another technical aspect of the present disclosure, provided is a TV having an exposed size of a screen changed by a motor, the TV including a cover having at least one Light Emitting Diode (LED), a speaker outputting a content containing audio data while the screen is covered fully or partially, a receiving module receiving user's input data or event data externally, and a controller controlling the at least one LED arranged on the cover based on the received user's input data or event data.

### ADVANTAGEOUS EFFECTS

According to an embodiment of the present disclosure, a system for selectively allowing a screen to be partially or fully exposed using a motor or the like added to a TV is provided.

According to another embodiment of the present disclosure, a solution for adaptively displaying an option for controlling a video or audio, which is displayed on a variable screen, on a fixed cover or the variable screen is provided. Accordingly, there is a technical effect of increasing the speed of accessing the above-described option.

According to further embodiment of the present disclosure, there is an advantage in that user convenience may be improved by more specifically providing a database that defines a location, size, and direction in which the above-described option is displayed.

### DESCRIPTION OF DRAWINGS

FIG. 1 is a diagram illustrating components inside a TV according to an embodiment of the present disclosure.
FIG. 2 is a diagram illustrating components inside a TV according to another embodiment of the present disclosure and an external device together.
FIG. 3 is a diagram illustrating an exterior of a TV according to an embodiment of the present disclosure.
FIG. 4 is a diagram illustrating an exterior of a TV according to another embodiment of the present disclosure.
FIG. 5 is a diagram illustrating an exterior of a TV according to further embodiment of the present disclosure.
FIG. 6 is a diagram illustrating a motor for adjusting a screen size of a TV according to an embodiment of the present disclosure.
FIG. 7 is an example of a flowchart illustrating a method of controlling a TV to change an exposed size of a screen by a motor according to an embodiment of the present disclosure.
FIG. 8 is another example of a flowchart illustrating a method of controlling a TV to change an exposed size of a screen by a motor according to an embodiment of the present disclosure.
FIG. 9 is further example of a flowchart illustrating a method of controlling a TV to change an exposed size of a screen by a motor according to an embodiment of the present disclosure.
FIG. 10 is a diagram for explaining an LED attached to a front cover based on a screen of a TV having an exposed screen size changed by a motor according to an embodiment of the present disclosure.
FIG. 11 is a diagram for explaining a variable option of a TV having an exposed screen size changed by a motor according to an embodiment of the present disclosure.
FIG. 12 is a diagram for describing a process for a TV to automatically change an exposed screen size when a voice recognition command fails according to an embodiment of the present disclosure.
FIG. 13 is a diagram illustrating an example of displaying an option using an LED attached to a cover according to an embodiment of the present disclosure.
FIG. 14 is a diagram for explaining a process of displaying an option differently when a TV screen is not exposed or partially exposed according to an embodiment of the present disclosure.
FIG. 15 is a diagram for explaining a process of displaying an option differently when a TV screen is exposed partially or fully according to an embodiment of the present disclosure.
FIG. 16 is a diagram for explaining a process of dividing and displaying one object on a part of a TV screen and a cover according to an embodiment of the present disclosure.
FIG. 17 is a diagram for describing a process of displaying a plurality of different types of events at specific locations of a cover according to an embodiment of the present disclosure.
FIG. 18 is a diagram for explaining a process of selecting an option displayed on a cover in response to motion recognition according to an embodiment of the present disclosure.
FIG. 19 is a diagram for explaining a plurality of holes formed in a cover installed in front based on a screen of a TV having an exposed screen size changed by a motor according to an embodiment of the present disclosure.
FIG. 20 is a diagram for explaining an example of a correspondence relationship between an option displayed on a screen and an option displayed on a cover according to an embodiment of the present disclosure.
FIG. 21 is a diagram for explaining another example of a correspondence relationship between an option displayed on a screen and an option displayed on a cover according to an embodiment of the present disclosure.
And, FIG. 22 is a diagram for explaining a different voice command set for controlling an option displayed on a screen and an option displayed on a cover, respectively, according to an embodiment of the present disclosure.

### BEST MODE

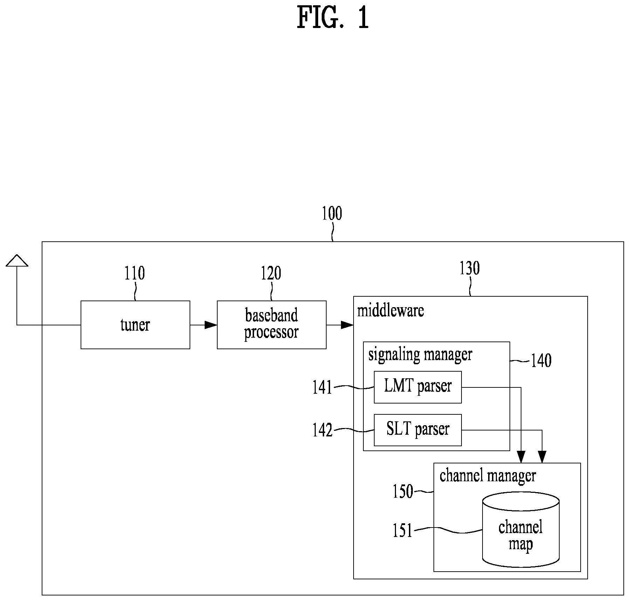

FIG. 1 is a diagram illustrating components inside a TV according to an embodiment of the present disclosure.

The present disclosure is applicable to various TV products, for example, the Digital Video Broadcasting (DVB) standard, which is a European standard, the Advanced Television Systems Committee (ATSC) 3.0 standard, which is a North American/Korean standard, etc.

In FIG. 1, a process for a TV 100 to perform and initial service scan operation in accordance with the ATSC 3.0 standard will be illustrated, but the scope of the rights of the present disclosure should be determined according to the matters described in the claims.

A tuner 110 determines whether a signal is present by using a predefined frequency list. If a signal is detected at a given frequency, a baseband processor 120 extracts L1 signaling of a preamble.

Furthermore, the baseband processor 120 transmits Physical Layer Pipe (PLP) data including link layer signaling and Low Level Signaling (LLS) to a middleware 130, and the middleware 130 may extract the link layer signaling and the LLS from the PLP data.

Meanwhile, the middleware 130 includes a signaling manager 140 and a channel manager 150.

The middleware 130 receives the PLP data including the link layer signaling and the LLS from the baseband processor 120 and passes the data to an appropriate parser.

For example, the middleware 130 extracts Link Mapping Table (LMT) from the link layer signaling and passes the LMT to an LMT parser 141. Furthermore, the middleware 130 extracts Service List Table (SLT) from the LLS and passes the SLT to an SLT parser 142.

The LMT parser 141 parses the LMT and extracts first information (e.g., PLPID, session information (IP address and port number), etc.) necessary to generate a channel map.

The SLT parser 142 parses the SLT and extracts second information (e.g., service id, service name, etc.) necessary to generate the channel map.

The extracted first information and second information are stored in a channel map 151.

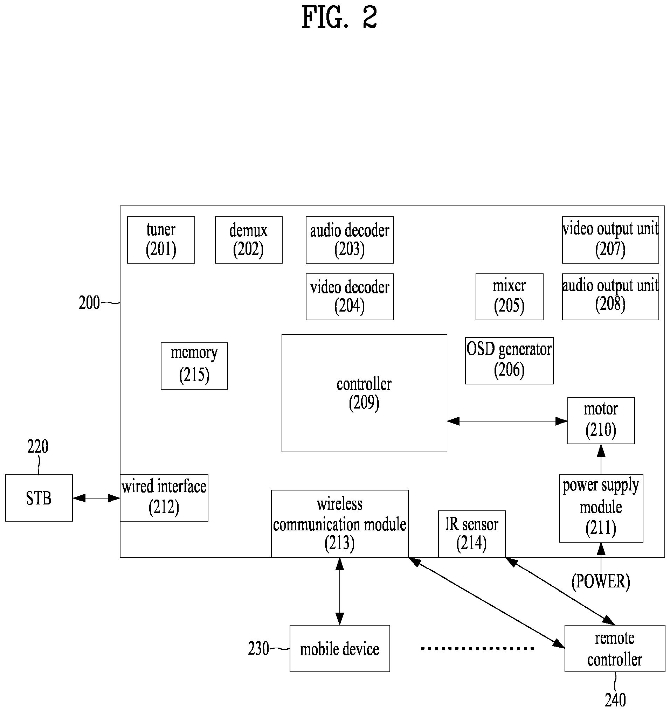

FIG. 2 shows components inside a TV and an external device according to another embodiment of the present disclosure. Those skilled in the art may implement the present disclosure by combining some components with reference to FIGS. 1 and 2. For example, the baseband processor 120 and the middleware 130 shown in FIG. 1 may be included in a controller 209 shown in FIG. 2.

Although a TV 200 shown in FIG. 2 includes various components, the scope of the rights of the present disclosure is not limited thereto and should be determined according to the matters described in the claims.

Moreover, the components inside the TV 200 shown in FIG. 2 may be controlled through the controller 209, and each of the components may be directly or indirectly connected thereto. That is, although not shown in FIG. 2, all of the components inside the TV 200 of FIG. 2 are designed to directly or indirectly transmit and receive control signals and/or data.

First, a tuner 201 receives a broadcast signal through an antenna or the like, and a demuxer (demux or demultiplexer) 202 demultiplexes audio data and video data included in the broadcast signal.

An audio decoder 203 decodes the audio data (in encoded state) included in the broadcast signal, and a video decoder 204 decodes the video data (in encoded state) included in the broadcast signal.

The decoded audio data is outputted through an audio output unit 207. The audio output unit 207 may be, for example, a speaker attached to or spaced apart from the TV 200.

Meanwhile, the decoded video data is directly outputted through a video output unit 208. Alternatively, a mixer 205 mixes menu data generated by an OSD generating unit 206 and the video data and then transmits the mixed menu data to the video output unit 208.

A memory 215 stores various control data and commands for controlling the TV 200, and the controller 209 may control all components in the TV with reference to the memory 215.

Furthermore, the TV 200 transmits and receives data through communication with various peripheral external devices. For example, video and audio data are received from an STB 220 via a wired interface 212, and then processed by the audio decoder 203 and the video decoder 204, respectively. Alternatively, the received video and audio data may be directly outputted through the audio output unit 207 and the video output unit 208 without passing through the decoders 203 and 204.

Various data is transmitted and received with a mobile device 230 (e.g., a mobile phone, a wearable device, etc.) via a wireless communication module 213, and an infrared (IR) signal of a remote controller 240 is received through an infrared sensor 214. Alternatively, the remote controller 240 capable of Bluetooth communication such as BT transmits and receives various data to and from the TV via the wireless communication module 213.

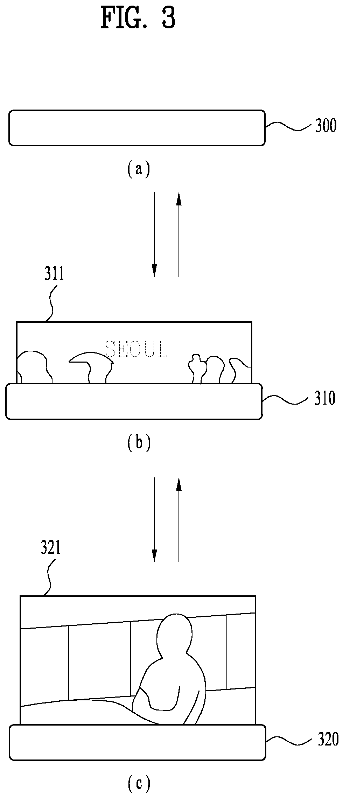

Unlike the related art TV, the TV 200 according to an embodiment of the present disclosure further includes a motor 210 inside or outside the TV 200. Therefore, it becomes possible to freely control an exposed area of a screen of the TV 200 using the motor 210 (more specific embodiments related to this will be described in detail in FIGs. 3 to 6 below). On the other hand, the related art TV has a problem in that a full screen of the same size is always exposed.

According to an embodiment of the present disclosure, unlike the related art, since power needs to be additionally supplied to the motor 210 through a power supply module 211, a technology that minimizes power consumption by optimizing the control of the motor is important. And, it is required as a very important interface technology to specifically define what kind of information is supposed to be displayed depending on an exposed area of a TV screen. As mentioned above, the related art TV does not need to review the above technical requirements because a full screen of the same size is always exposed.

FIG. 3 illustrates an exterior of a TV according to an embodiment of the present disclosure.

Unlike the related art, the screen of the TV according to an embodiment of the present disclosure may be included in the housing 300, as shown in (a) of FIG. 3. When a certain condition is satisfied (for example, when a signal pressing a power button of a remote controller once is input), as shown in (b) of FIG. 3, only a partial screen 311 of the TV may be exposed from the housing 310. When another certain condition is satisfied (for example, when a signal pressing the power button of the remote controller twice is input), as illustrated in (c) of FIG. 3, an entire screen 321 of the TV may be designed to be exposed from the housing 320. Needless to say, a mode in (c) of FIG. 3 may be switched to a mode in (b) and a mode in (a) in a reverse direction, and the mode in (b) may be skipped.

To implement this, the screen 321 of the TV may include a material for forming a flexible display. For example, a bendable or rollable flexible display material may be for a plastic OLED (POLED or P-OLED), and may be finished with a colorless polyimide (CPI) film, which is a plastic material. Here, the CPI film is for a transparent but rigid plastic material like glass, may freely change a shape, and may not easily break even a pressure is applied..

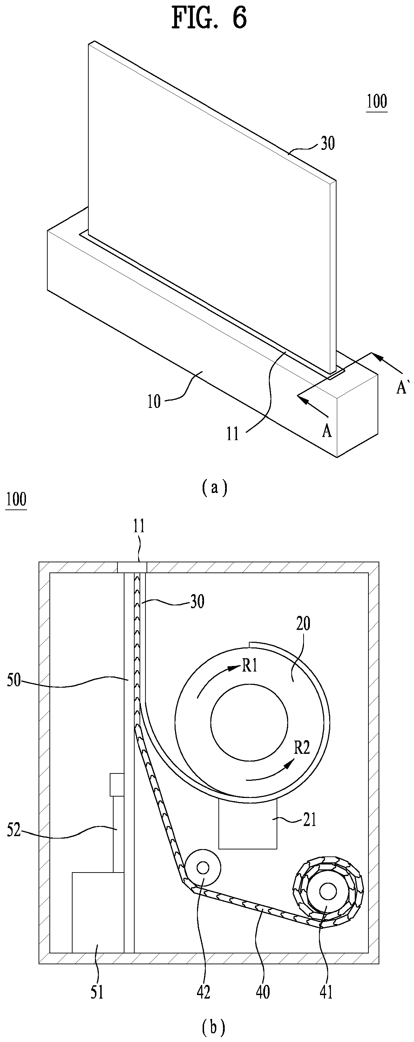

The screen 321 may be wound around rollers inside the housing 320 and then unfolded, and a motor for driving the rollers may be required. This will be described below in more detail with reference to FIG. 6.

To be distinguished from the related art, a TV designed as shown in FIG. 3 may be defined as a rollable TV or a flexible TV, a mode illustrated in (a) of FIG. 3 may be defined as a zero view, a mode illustrated in (b) of FIG. 3 may be defined as a partial view, and a mode illustrated in (c) of FIG. 3 may be defined as a full view.

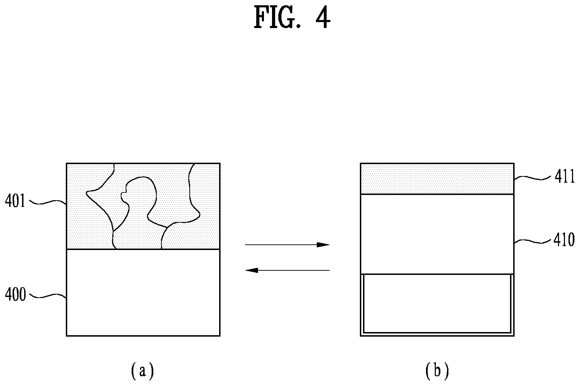

FIG. 4 is a diagram illustrating an exterior of a TV according to another embodiment of the present disclosure.

Although it has been described with reference to FIG. 3 that a flexible display material is used for a screen of the TV, the TV may not necessarily include a material for a flexible display, and a screen of a general TV may be used without change in the embodiment of FIG. 4.

However, differently from the related art, as shown in (a) of FIG. 4, covers 400 having the same size or similar sizes may be positioned under the screen 401 of the TV. When a certain condition is satisfied (for example, when a signal pressing a power button of a remote controller once is input), as shown in (b) of FIG. 4, a cover 410 may be designed to move in an up direction to expose only a partial TV screen 411. Needless to say, a mode in (a) of FIG. 4 may be switched to a mode shown in (a) of FIG. 4. To freely move the cover shown in FIG. 4 in an up/down direction, a motor may be designed to be positioned around the cover.

To be distinguished from the related art, the TV designed as shown in FIG. 4 may be defined as an Atelier TV, a mode illustrated in (a) of FIG. 4 may be defined as a full view, and a mode illustrated in (b) of FIG. 4 may be defined as a line view or a partial view.

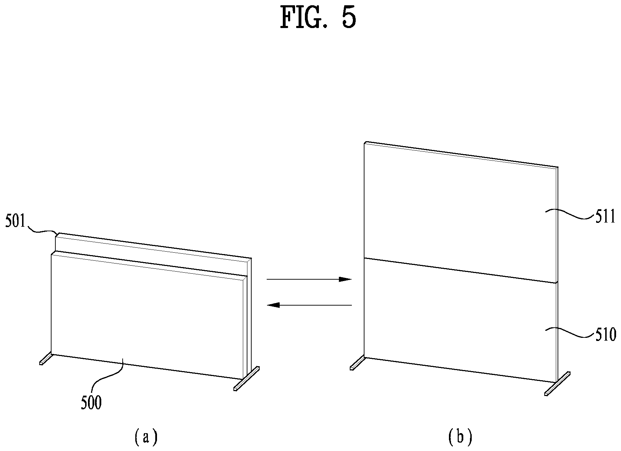

FIG. 5 is a diagram illustrating an exterior of a TV according to further embodiment of the present disclosure.

Similar to FIG. 4, a material for a flexible display may not necessarily be used as a TV screen, and a general display may be used without change. However, differently from FIG. 4, the TV screen other than a cover itself is moved.

For example, as shown in (a) of FIG. 5, the cover 500 having the same size or similar sizes is designed to be positioned under the TV screen 501. The TV screen 501 and the cover 500 may be apart from each other at a certain interval to prevent friction from being generated. When a certain condition is satisfied (for example, when a signal pressing a power button of the remote controller once is input), as illustrated in (b) of FIG. 5, the TV screen 511 may move in an up direction to design the entire TV screen 511 to be exposed. In this case, differently from FIG. 4, a cover 510 may not move.

Needless to say, in a mode of (b) of FIG. 5 may be switched to a mode of (a) of FIG. 5. To freely move the TV screen shown in FIG. 5 in an up/down direction, a motor may be designed around the TV screen

To be distinguished from the related art, a TV designed as shown in FIG. 5 may be defined as an interior TV, a mode illustrated in (a) of FIG. 5 may be defined as a partial view or a line view, and a mode illustrated in (b) of FIG. 5 may be defined as a full view.

FIG. 6 is a diagram for explaining a motor for adjusting a screen size of a TV according to an embodiment of the present disclosure.

Although the motor is applicable to the embodiments of FIGS. 4 and 5, it is assumed that the motor is applied to the TV of FIG. 3 for convenience of description, and FIG. 6 will be described.

(a) of FIG. 6 illustrates a screen of the housing and the TV screen shown in FIG. 3 in a diagonal direction, (b) of FIG. 6 is a cross-sectional view taken along a line A-A' of (a) of FIG. 6.

As shown in (a) of FIG. 6, the TV system 100 may further include the housing 10.

The housing 10 may be configured to accommodate various components, and more particularly, the housing 10 may accommodate, for example, the screen 30 and various electronic components for operating the screen 30.

As shown in (b) of FIG. 6, the TV system 100 may include the roller 20 rotatably installed in the housing 10. Although not shown, the roller 20 may include sleeves formed at both ends, and the sleeves may be rotatably supported with respect to the housing 10 by bearings.

The roller 20 may be connected to the motor 21 installed in the housing 10, and may rotate in a clockwise direction R1 or a counterclockwise direction R2 as illustrated by the motor 21. To adjust a rotation speed of the roller 20, a gear train may be located between the motor 21 and the roller 20.

The TV system 100 may include the screen 30 configured to display various contents and information related to the contents. For example, the screen 30 may display video content, audio content, and other ancillary content. Such contents include various pieces of information associated thereto, for example, a playback time in a video content, a title of the content, and the like, and the display 30 may also display such relevant information.

The screen 30 may be accommodated in the housing 10 as illustrated in such a manner that the TV system 100 may have a compact structure. To accommodate the screen 30 in the housing 10, the screen 30 needs to be basically deformed. Accordingly, the TV system 100 may use a flexible display as the screen 30.

Due to this deformable property, as shown in (b) of FIG. 6, the screen 30 may be rolled on the roller 20. The screen 30 may be wound around the roller 20 or unwound from the roller 20 according to a rotation direction of the roller 20. The screen 30 may be unwound from the roller 20 and project or roll out to the outside of the housing 10. On the contrary, the screen 30 may be wound around the roller 20 to retract/roll in the housing 10. In detail, as shown in (b) of FIG. 6, when the roller 20 rotates in a clockwise direction R1, the screen 30 may be unwound from the roller 20 and be expanded to the outside of the housing 10 through an opening 11 formed in the housing 10.

Therefore, as described above, a screen accommodated in the housing 300 in (a) of FIG. 3 may be extended to the outside of the housing 310 as shown in (b) of FIG. 3, and a screen 311 having a certain size may be formed. When the roller 20 further rotates in the clockwise direction R1, the screen 30 may be further unwound from the roller 20. Therefore, as shown in (c) of FIG. 3, the screen may protrude to a larger size outside the housing 10, and may form a screen of a larger size. When the roller 20 rotates in the counterclockwise direction R1, the screen 30 may be wound around the roller 20 and may be contracted into the housing 10 through the opening 11. Accordingly, as shown in (b) of FIG. 3, the screen 321 of (c) of FIG. 3 may be contracted to have a relatively smaller size inside the housing 310, thereby forming a smaller screen. When the roller 20 further rotates counterclockwise R2, the screen 30 may be further wound around the roller 20. Therefore, as shown in (a) of FIG. 3, the screen may not protrude to the outside of the housing 300, and may be completely accommodated in the housing 300.

A front portion of the screen 30, which is expanded from the TV system 100, may be protected by the window, while a rear portion of the screen 30 may be exposed. The screen 30 includes sensitive electronic components and substrates, and thus the screen 30 needs to be properly protected to prevent malfunction. Accordingly, as illustrated in (b) of FIG. 6, the TV system 100 may include the cover 40 configured to cover the rear portion of the extended screen 30.

The cover 40 may include a plurality of links connected to each other. The link may have a width corresponding to a width of the screen 30, and the links connected to each other, that is, the cover 40, may form a single plate covering the rear portion of the screen 30. Any one of the links is pivotable with respect to another adjacent link, and thus as shown in the drawing, the cover 40 may be wound around a first roller 41 and may be guided to a rear side of the screen 30 by the second roller 42.

When the screen 30 is expanded during an operation of the TV system 100, the first roller 41 may rotate to unwind the cover 40. The unwound cover 40 is guided by the second roller 41 and is attached to the rear portion of the screen 30. Accordingly, the cover 40 may be extended to the outside of the housing 10 together with the screen 30 to protect the rear portion of the screen 30.

When the screen 30 is contracted, the first roller 41 may rotate in an opposite direction to separate the cover 40 from the screen 30, and the separated cover 40 may be guided by the second roller 42 to be wound around the first roller 41. In the cover 40, the first roller 41 may be driven by the motor 21 together with the roller 20, and a separate motor for driving the first roller 41 may be installed in the housing 10.

The screen 30 may be difficult to maintain an expanded state due to the flexibility thereof. Accordingly, the TV system 100 may include the supporter 50 configured to support the extended screen 30. The supporter 50 may be extended to the outside of the housing 10 through the opening 11 by the motor 51 and the auxiliary supporter 52 connected thereto. Accordingly, the supporter 50 may be extended to the outside of the housing 10 together with the screen 30. Accordingly, the screen 30 expanded by the supporter 50 may be stably supported to display content to the user.

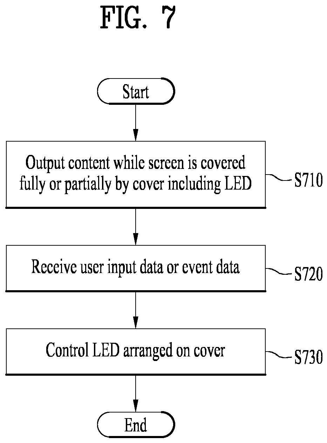

FIG. 7 is an example of a flowchart illustrating a method of controlling a TV to change an exposed size of a screen by a motor according to an embodiment of the present disclosure. An embodiment of the present disclosure illustrated in FIG. 7 is applicable to all TV products in which a size of an exposed screen is variable. Yet, for convenience of description the TV system illustrated in FIG. 5 (e.g., a state that the size of the exposed screen is changed, while the cover located in front of the screen is fixed, etc.) will be exemplarily described.

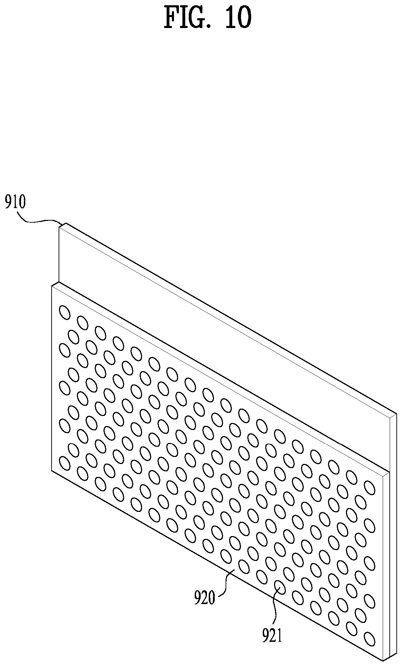

First of all, as shown in FIG. 7, according to an embodiment of the present disclosure, a TV having an exposed screen size is changed by a motor changes size outputs a content including at least one of audio data and video data while a TV screen is covered partially or fully by a cover including at least one Light Emitting Diode (LED) (S710). The cover including the LED will be described in more detail in FIG. 10.

Furthermore, the TV according to an embodiment of the present disclosure receives user input data or event data from the outside (S720).

And, the TV according to an embodiment of the present disclosure is designed to control at least one LED arranged on the cover based on the user's input data or event data received in the step S720 (S730).

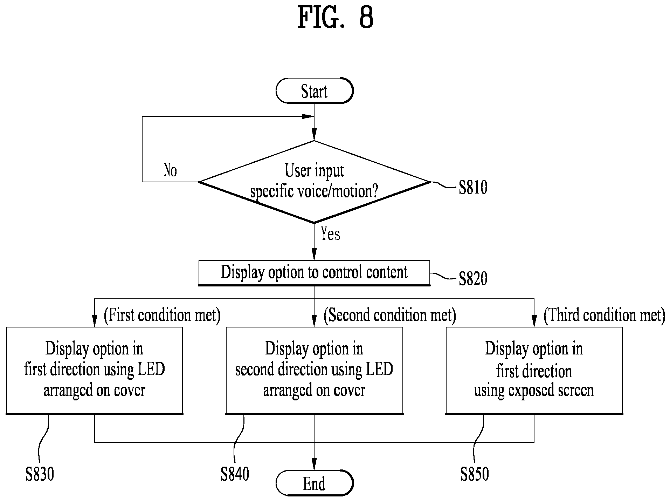

In particular, a detailed embodiment of controlling the LED of the cover located in front of a variable TV screen will be described in more detail in FIG. 8.

FIG. 8 is another example of a flowchart illustrating a method of controlling a TV to change an exposed size of a screen exposed by a motor according to an embodiment of the present disclosure.

First, as shown in FIG. 8, the TV according to an embodiment of the present disclosure determines whether user's input data received corresponds to a specific voice or a specific motion (S810).

As a result of the determination (S810), when the received user's input data corresponds to the specific voice or the specific motion, an option for controlling audio data or video data of the content being outputted (on a TV screen partially or fully exposed) is displayed on the at least one LED arranged on the cover or the screen (S820).

In particular, one of the other features of the present disclosure is that at least one of a position, size, and direction for displaying the option in the step S820 varies depending on the exposed size of the screen.

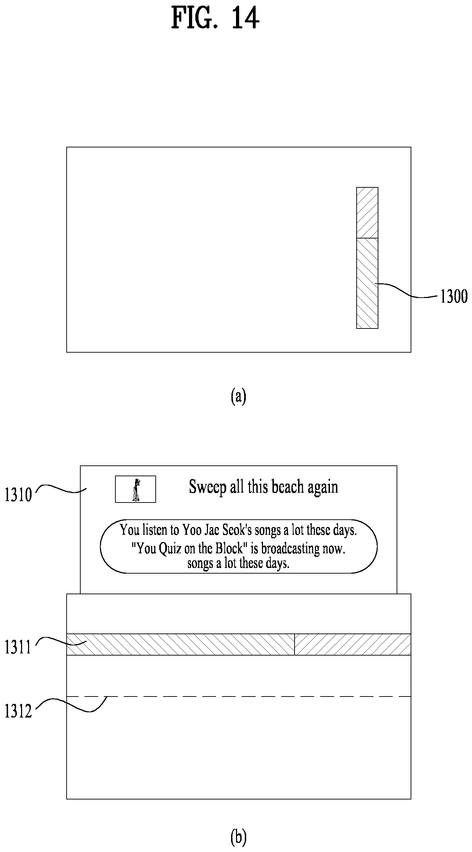

When a first condition (e.g., a state that the TV screen is completely covered by the cover) is met, the option is displayed in a first direction (e.g., a vertical direction) using at least one LED arranged on the cover (S830). The related embodiment will be described in more detail in FIG. 14 (a).

When a second condition (e.g., a state that the TV screen is partially covered by the cover) is met, the option is displayed in a second direction (e.g., a horizontal direction) different from the first direction (S840) using at least one LED arranged on the cover (S840). The related embodiment will be described in more detail in FIG. 14 (b).

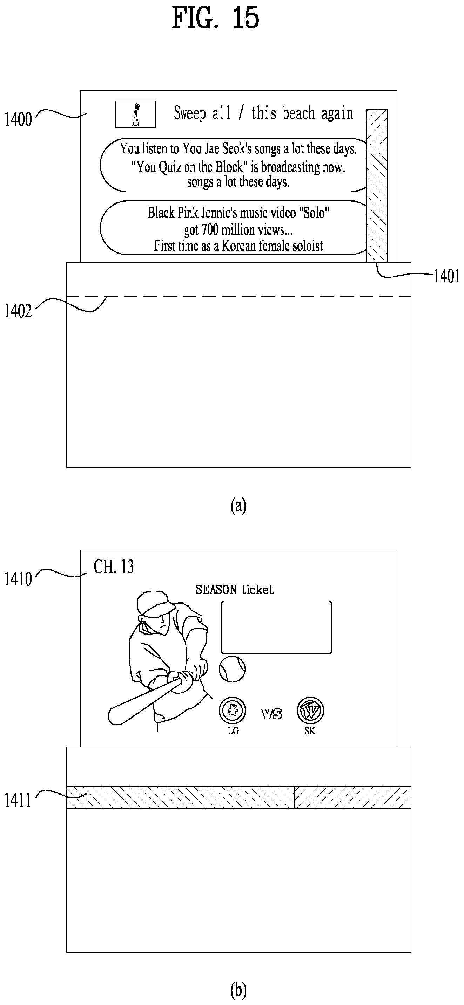

When a third condition (e.g., a state that the TV screen is fully exposed) is met, unlike the first and second conditions described above, the option is displayed in the same direction as the first direction using the TV screen rather than the cover (S850). The related embodiment will be described in more detail with reference to FIG. 15.

In order to implement rollable TVs according to various conditions illustrated in FIG. 8, the database shown in Table 1 below is designed to be stored in advance in the memory. Of course, to modify and design some conditions according to the needs of those skilled in the art. Also falls within the scope of other rights of the present disclosure.

**[Table 1]**

| Type of Condition | TV Screen Exposure Level | Option Display Location | Option Display Direction |
|---|---|---|---|
| 1^{st} Condition | TV screen fully covered by cover | Display on LED of cover | Vertical direction |
| 2^{nd} condition | TV screen partially covered by cover | Display on LED of cover | Horizontal direction |
| 3^{rd} Condition | TV screen fully exposed | Display on TV screens or LED of cover | Vertical or horizontal direction |

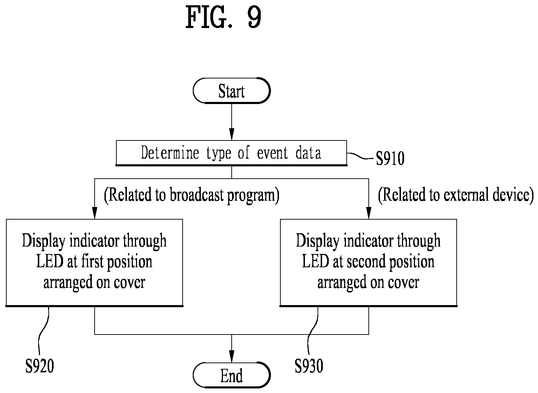

FIG. 9 is further example of a flowchart illustrating a method of controlling a TV to change an exposed size of a screen by a motor according to an embodiment of the present disclosure.

The TV according to an embodiment of the present disclosure determines the type of the event data received in the step S720 of FIG. 7 (S910).

As a result of the determination result (S910), when the received event data is related to a broadcast program, an indicator corresponding to the event data is designed to be displayed through an LED at a first position arranged on the cover (S920).

On the other hand, when the event data received as a result of the determination (S910) is related to an external device, an indicator corresponding to the event data is designed to be displayed through an LED at a second position arranged on the cover (S930). It is characterized in that the first position in the step S920 is located more remotely than the second position in the step S930 with respect to the exposed TV screen.

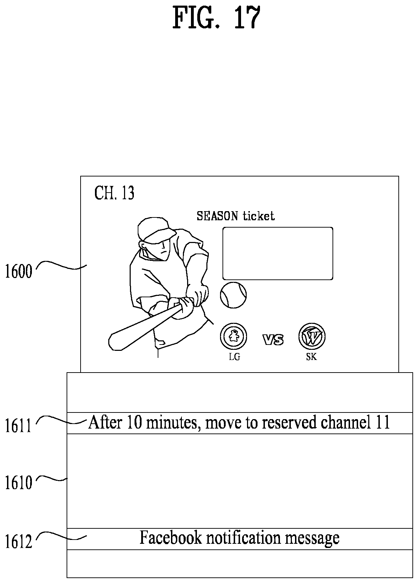

A more detailed embodiment corresponding to the step S920 and the S930 described above will be described later with reference to FIG. 17.

FIG. 10 is a diagram for explaining an LED attached to a front cover based on a screen of a TV having an exposed screen size changed by a motor according to an embodiment of the present disclosure. With reference to FIG. 5, FIG. 10 may be supplementarily interpreted by those skilled in the art.

Compared to FIG. 5, a cover 920 of the TV of FIG. 10 is also fixed, and a screen 910 of a rear surface is moved up and down by an operation of a motor or the like. Therefore, an exposed size of the screen 910 may vary. Although FIG. 10 illustrates a case in which the screen 910 is partially exposed, it is also possible to design the screen 910 to be fully covered by the cover 920.

Meanwhile, compared to FIG. 5, FIG. 10 additionally includes at least one LED 921 on the cover 920.

For example, when an audio content is outputted while the screen 910 is not exposed at all, a User Interface (UI) (e.g., a slide bar) that can control the audio content is implemented through the LED 921 located on the cover 920.

Alternatively, when a video content is outputted while the screen 910 is partially or fully exposed, a UI capable of controlling the video content may be implemented through the LED 921 located on the cover 920.

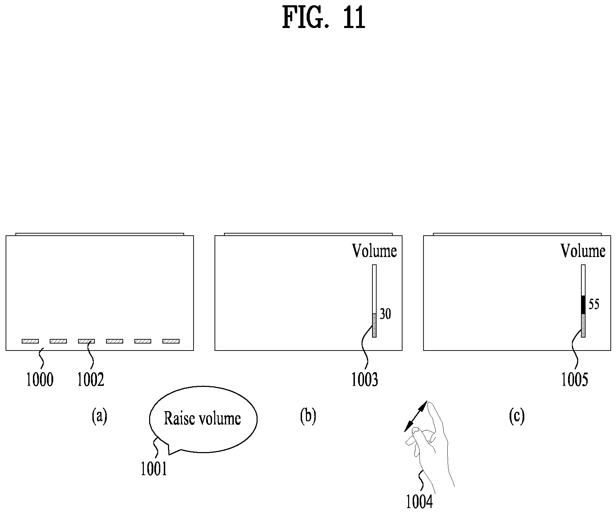

For example, each of the LEDs 921 is turned on/off or a color is adjusted to provide feedback to a user, and may also be used as an option for controlling the audio/video content. A more detailed embodiment of such an option will be described later with reference to FIG. 11.

FIG. 11 is a diagram for explaining a variable option of a TV having an exposed screen size changed by a motor according to an embodiment of the present disclosure.

First of all, as shown in FIG. 11 (a), it is assumed that an audio content is being outputted without the TV screen being exposed.

In doing so, when a user utters an arbitrary voice (e.g., raise the volume) 1001, a dotted line indicating that voice recognition is being performed is displayed using the LED 1002 provided in the cover 1000. Alternatively, in response to a specific voice (e.g., Hi LG, etc.) for triggering voice recognition, the LED 1002 shown in FIG. 11 (a) blinks to give feedback to the user that the voice recognition is in progress, which is also within the scope of another right of the present disclosure. Although FIG. 11 illustrates that the user utters a voice to raise the volume, it is also within the scope of another right of the present disclosure that a related option is displayed in response to a voice of "play next song".

When the voice recognition is successful, as shown in FIG. 11 (b), an option to control the volume of the audio content is displayed using an LED 1003 provided on a cover.

Furthermore, when a specific motion 1004 of the user is recognized, an LED 1005 provided on the cover is used to display a higher volume level in response thereto, as shown in FIG. 11 (c). Another feature of the present disclosure is to design a volume level to vary according to the width between two fingers 1004 of the user.

When designing in this way, there is no need to unnecessarily expose the TV screen, so there is an effect of minimizing motor driving to lower power consumption.

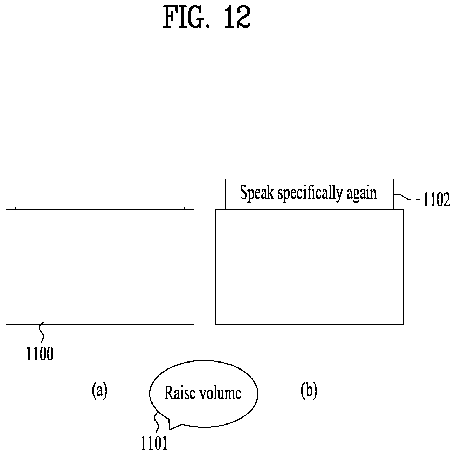

However, when the recognition of the user voice 1001 shown in FIG. 11 (a) fails, a solution for providing feedback to the user will be described later with reference to FIG. 12.

FIG. 12 is a diagram for describing a process for a TV to automatically change an exposed size of a screen when a voice recognition command fails, according to an embodiment of the present disclosure.

As shown in FIG. 12 (a), it is assumed that a user voice 1101 is uttered, and when the user voice is too small or unclear, an LED installed on a cover 1100 does not respond. However, in this case, there is a problem that a user may not know what problem has occurred.

To solve this problem, only when the recognition of the user voice 1101 fails, as shown in FIG. 12 (b), a content that exposes only a minimum area of a TV screen 1102 and guides the problem of the user voice is outputted.

Of course, not driving the motor, that is, displaying the same or similar guide message on the cover 1100 without exposing the TV screen 1102, is also within the scope of other rights of the present disclosure.

In FIG. 11 and FIG. 12, an embodiment, in which only audio content is outputted without a TV screen being exposed and an option for controlling it is implemented through at least one LED installed on the cover, has been described.

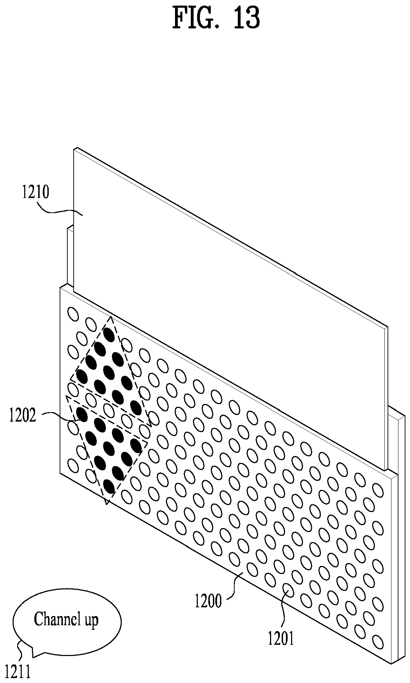

On the other hand, in FIG. 13, an embodiment of outputting a video content while the TV screen is exposed and implementing an option for controlling it will be described.

FIG. 13 illustrates an example of displaying an option using an LED attached to a cover according to an embodiment of the present disclosure.

As illustrated in FIG. 13, it is assumed that a video content such as a broadcast program is outputted while a TV screen 1210 is fully exposed.

In doing so, when a user utters a specific voice 1211 (for example, channel up), an option corresponding to the specific voice is displayed on a cover 1200. It is possible to control the video content displayed on the TV screen 1210 through the option displayed on the cover.

More specifically, for example, an LED 1201 of a first group positioned on the cover 1200 is in an off-state and an LED 1202 of a second group is changed to an on-state. In addition, the LED 1202 of the second group corresponds to an upward arrow indicating `channel up' and a downward arrow indicating `channel down'.

After such an option is displayed, a channel of the broadcast outputted from the screen 1210 is changed by a user's voice or motion.

In the previous drawings, it has been described on the assumption that the TV screen is fully 1 covered or exposed, but according to an embodiment of the present disclosure, a position, size, and direction of the option for controlling audio/video content vary according to a change of an exposed size of the TV screen. In the case of designing in this way, technical effects capable of promoting user convenience and improving the speed of data processing are expected, which will be described in more detail with reference to FIG. 14 and FIG. 15.

FIG. 14 is a diagram for explaining a process of displaying an option differently in case of a TV screen that is not exposed or partially exposed according to an embodiment of the present disclosure.

First of all, it is assumed that audio content (e.g., music) is being played in FIG. 14 (a) with a TV screen fully covered by a cover.

In doing so, when a user utters a volume-related voice, an option 1300 for controlling the audio content is displayed using an LED of the cover. In this case, the option 1300 is displayed, for example, in a vertical direction. It may be implemented with reference to the database of Table 1 described above.

Alternatively, as shown in FIG. 14 (b), even when the user utters the volume-related voice while only a portion 1310 of the TV screen is exposed, an option 1311 for controlling the audio content is displayed using an LED of the cover. However, unlike FIG. 14(a), in FIG. 14 (b), the option 1311 for controlling the content is displayed in a horizontal direction. Of course, a vertical display may be considered, but the design takes into account of an additional line 1312 displayed on the LED of the cover.

The line 1312 shown in FIG. 14 (b) is designed to correspond to a lowest line of the TV screen covered by the cover. According to an embodiment of the present disclosure, an exposed size of the TV screen may be varied by a motor, and it is difficult for a user to determine how much exposure has been made or how long it will take for full screen exposure. To solve this problem, while an exposed size of the TV screen is varying, the lowest line of the screen covered by the cover is implemented through the LED provided on the cover.

However, in the case of designing in this way, when a volume-related option 1311 for controlling the audio content is displayed in the vertical direction, there is a problem of overlapping with the line 1312. Hence, when a portion of the TV screen is exposed, the option 1311 is designed to be displayed in the horizontal direction. Of course, it is also possible to design variations according to the needs of those skilled in the art.

FIG. 15 is a diagram for explaining a process of displaying an option differently when a TV screen is partially or fully exposed, according to an embodiment of the present disclosure.

Compared to FIG. 14 (b), FIG. 15 (a) is the same in that only a portion of a TV screen is exposed. However, in FIG. 14 (b), for example, 1/3 of the full TV screen is exposed, whereas in FIG. 15 (a), for example, only 1/2 of the full TV screen is exposed.

As illustrated in FIG. 15 (a), it is assumed that audio content is being outputted while a portion of a TV screen 1400 is exposed. As described above in FIG. 14, a line corresponding to the lowermost line of the TV screen covered by the cover is displayed through the LED 1402 of the cover. Accordingly, there is an advantage in that a user may intuitively know how much the screen is exposed and predict a time taken for the screen to be fully covered or exposed even while the screen is varying.

On the other hand, unlike FIG. 14 (b), in FIG. 15(a), an option 1401 for controlling the audio content is controlled to be displayed on the TV screen rather than the LED of the cover. The reason for designing in this way is that when the option 1401 is implemented as an LED of the cover rather than a TV screen, a problem of overlapping with the aforementioned LED line 1402 occurs.

Furthermore, FIG. 15 (b) assumes that the TV screen 1410 is fully exposed. In this case, when the user utters "volume up " or " channel up", a related option 1411 is displayed on the LED of the cover. However, although FIG. 15 (b) illustrates that the option 1411 is displayed in the horizontal direction, the option 1411 may be displayed in the vertical direction. The reason is that since the TV screen is fully exposed, it is not necessary to implement the line 1312 shown in FIG. 14 (b) and the line 1402 shown in FIG. 15 (a). Therefore, it is possible to arrange the option 1411 at any position and direction of the LED of the cover.

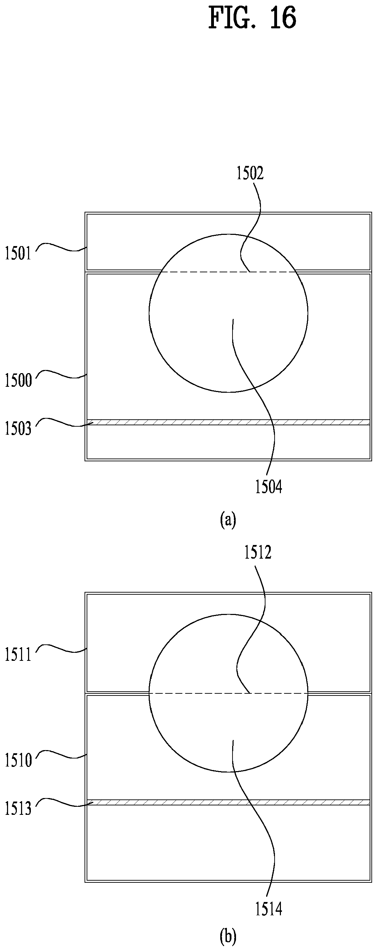

FIG. 16 is a diagram for explaining a process of dividing and displaying one object on a portion of a TV screen and a cover according to an embodiment of the present disclosure.

Another feature of the present disclosure is that one object can be organically displayed using an LED provided on a fixed cover and a variable TV screen.

For example, it is assumed that a wake-up notification time is reserved using a TV according to an embodiment of the present disclosure.

As shown in FIG. 16 (a), a lower end line of an unexposed TV screen is displayed through an LED first area 1503 of a cover 1500 as described above. As the TV screen moves upward, the LED first area 1503 also moves upward.

On the other hand, an image related to weather, for example, a partial area 1502 of a solar object, is displayed on an exposed TV screen 1501, and a remaining area 1504 of the solar object is displayed through an LED on the cover.

And, as shown in FIG. 16 (b), as time goes by, the TV screen 1511 is exposed relatively more, and the partial area 1512 of the solar object also increases.

On the other hand, the remaining area 1514 of the solar object displayed on the cover gradually becomes smaller.

Finally, although not shown in FIG. 16, when the TV screen is fully exposed, the solar object is displayed in a complete form (e.g., a circle) only on the TV screen, and no solar object is displayed through the LED project of the cover.

In FIG. 16, the solar object according to the wake-up time notification has been exemplarily described, but it is additionally applicable even when a specific object included in arbitrary video data such as TV broadcasting and the like is recognized.

For example, some of a specific object (e.g., a person, an animal, etc.) included in the TV broadcast is displayed through the exposed screen, and the rest of the recognized specific object is displayed through the LED of the cover, which has the advantage of providing the full object to a user in real time even if the TV screen is covered by the cover.

FIG. 17 is a diagram for describing a process of displaying a plurality of different types of events at specific positions of a cover according to an embodiment of the present disclosure.

FIG. 17 assumes that a TV according to an embodiment of the present disclosure has fully exposed a screen 1600. Yet, it is applicable even when only the TV screen 1600 is partially exposed or fully covered by a cover 1610.

The TV may receive event data from various sources (e.g., broadcasting stations, servers, surrounding mobile phones, external devices, etc.).

In this case, the TV according to an embodiment of the present disclosure defines that a type of the received event data is determined first and a related indicator is displayed on a specific LED among LEDs provided on the cover according to the determined type of the event data.

For example, when the received event data is related to a broadcast program, an indicator 1611 corresponding to the event data is designed to be displayed through an LED at a first position arranged on the cover 1610.

On the other hand, when the received event is related to an external device (e.g., when a mobile phone connected through wireless communication receives a text message or SNS), an indicator 1612 corresponding to the event data is displayed through an LED at a second position arranged on the cover 1610.

As shown in FIG. 17, the first position at which the broadcast program related indicator 1611 is displayed is designed to be located more remote than the external device related indicator 1612 with respect to the exposed screen 1600. Accordingly, there is an advantage in that a user may more quickly recognize the occurrence of a broadcast related event together with the broadcast screen.

Meanwhile, in FIG. 17, it is illustrated that the indicators 1611 and 1612 are displayed in the form of messages/text using LEDs, but simple display with emoticons is also within the scope of other rights of the present disclosure.

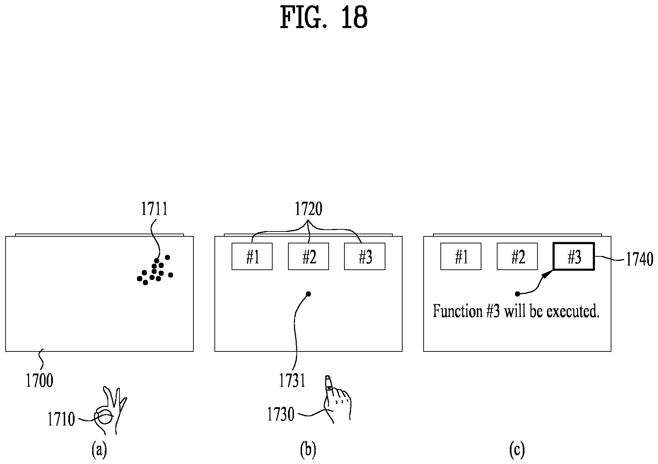

FIG. 18 is a diagram for explaining a process of selecting an option displayed on a cover in response to motion recognition according to an embodiment of the present disclosure.

As shown in FIG. 18 (a), when a TV according to an embodiment of the present disclosure recognizes a user's specific motion 1710, corresponding graphic data is outputted using an LED 1711 of a cover 1700. Here, the specific motion 1710 is defined as a signal that triggers a plurality of options.

As shown in FIG. 18 (a), by expressing the LED 1711 corresponding to the user motion 1710, there is an advantage of giving feedback to the user whether the TV properly recognizes the user's gesture.

As shown in FIG. 18 (b), when a plurality of options 1720 are displayed, a pointer 1731 whose position changes according to a motion of user's finger 1730 is designed to be displayed additionally.

And, as shown in FIG. 18 (c), when the pointer is located at a specific option 1740 for a predetermined time or longer, a function corresponding to the specific option 1740 may be automatically executed.

This design has the advantage of being able to quickly access any options without having to drive a motor to expose a TV screen.

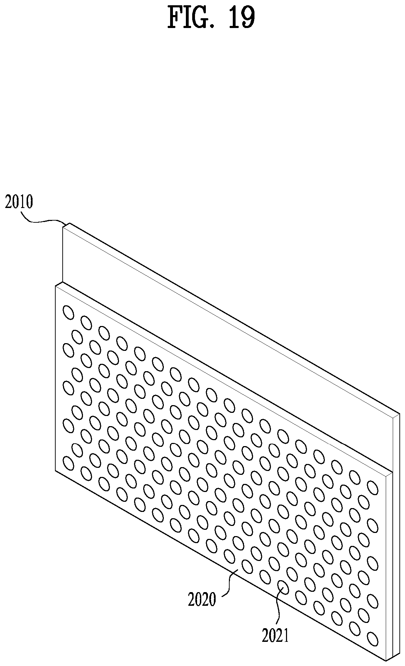

FIG. 19 is a diagram for explaining a plurality of holes formed in a front cover based on a screen of a TV having an exposed screen size changed by a motor according to an embodiment of the present disclosure.

In the previous drawings, an embodiment in which an LED is separately provided to a cover installed in front of a TV screen has been described. Yet, as another feature of the present disclosure, it is also possible to design to form holes in a cover and utilize the TV screen as a backlight without separately installing LED in the cover.

For example, as shown in FIG. 19, a cover 2020 is installed in front of a TV screen 2010, and a plurality of holes 2021 are formed in the cover 2020.

Accordingly, for an area where the TV screen 2010 and the cover 2020 overlap each other, the light emitted by the TV screen 2010 is transmitted through the holes 2021 of the cover 2020. By controlling some/all areas of the TV screen 2010 or opening/closing some/all of the holes 2021, it is possible to control a specific color to be displayed only through specific holes.

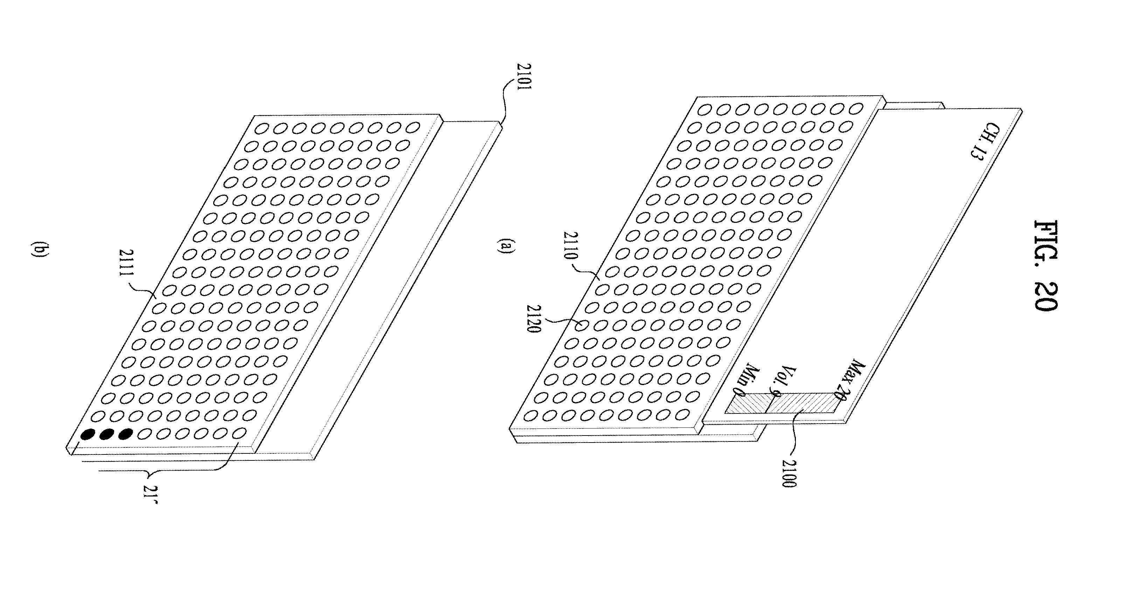

FIG. 20 is a diagram for explaining an example of a correspondence relationship between an option displayed on a screen and an option displayed on a cover according to an embodiment of the present disclosure.

As shown in FIG. 20 (a), it is impossible to display any option or the like through holes 2120 formed in a cover 2110 in a state where a TV screen is fully or almost fully exposed (e.g., full view). This is because there is almost no TV screen on the back of the cover.

Thus, in this case, as shown in FIG. 20 (a), an option 2100 capable of controlling a volume, for example, is displayed on the TV screen. It is assumed that volume control is possible up to 20 levels and that a current volume is level 9.

On the other hand, as shown in FIG. 20 (b), in a state in which a TV screen 2101 is fully or almost fully covered by the cover 2111 (e.g., zero view or partial view), it is possible to display any option or the like through holes formed in a cover 2111. This is because the TV screen 2101 does not exist on a rear surface of the cover 2111.

Therefore, in this case, as shown in FIG. 20 (b), an option 2121 capable of controlling the volume, for example, is displayed on the TV screen. Yet, unlike the option 2100 displayed on the TV screen, since the number of holes formed in the cover is fixed (assuming that a maximum of seven holes are formed vertically in FIG. 20 (b)), a technology for scaling them is required.

To solve this problem, according to an embodiment of the present disclosure, the following equation is used. [Number X of holes formed in TV cover to transmit light] = [Current level of volume displayed on TV screen ("9" in FIG. 20)] * [Total number ("7" in FIG. 20) of holes formed on vertical axis of TV cover]/[Maximum level ("20" in FIG. 20) of volume displayed on TV screen]

In the situation of FIG. 20, 3.18 is obtained as X by applying the above equation. However, since the number of holes is an integer, it is designed so that light is transmitted only in three holes through descending or half descending.

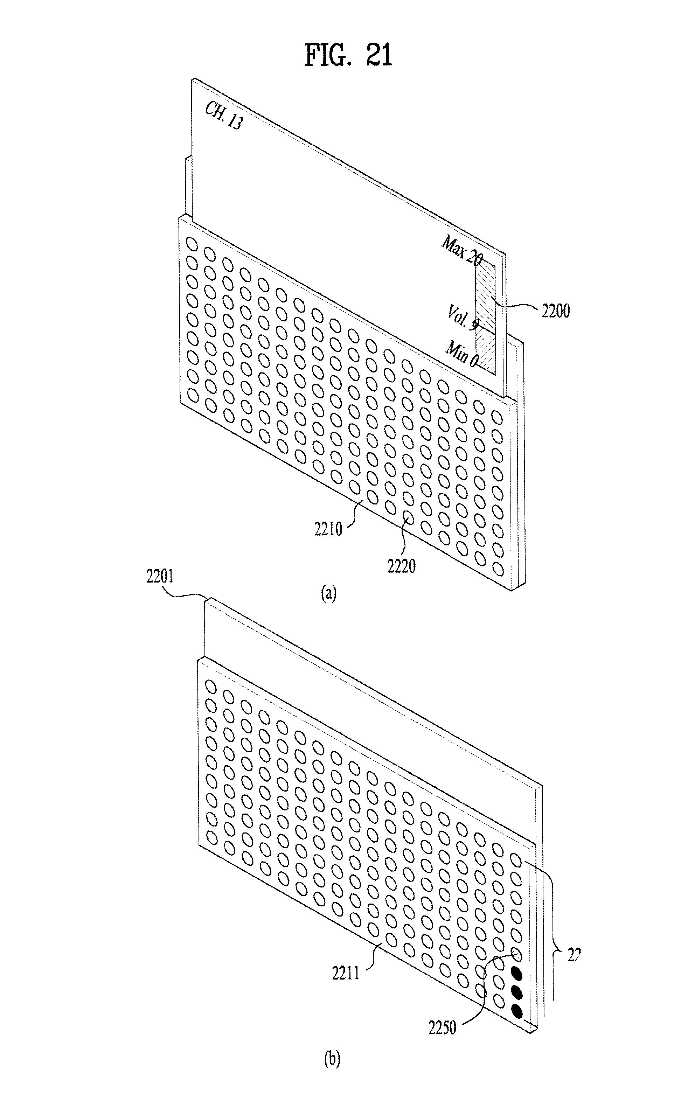

Yet, an embodiment for reflecting a more accurate user's intention will be described with reference to FIG. 21.

FIG. 21 is a diagram for explaining another example of a correspondence relationship between an option displayed on a screen and an option displayed on a cover according to an embodiment of the present disclosure.

Since FIG. 21 is assumed to be mostly the same situation as FIG. 20, redundant descriptions will be omitted.

Yet, compared to FIG. 20 (b), in FIG. 21 (b), it may be seen that light is additionally transmitted through one hole 2250 but implemented in a different color. In other words, considering the correspondence (proportional) relationship between an option displayed on a TV screen and an option displayed through holes formed in a cover, if a result value is a decimal point rather than an integer, it may be implemented in a different color to inform a user that, for example, a current volume level is greater than 3/7 and less than 4/7. This design has the advantage of being able to express it more similar to an actual volume displayed on the TV screen (level 9 among maximum 20 levels).

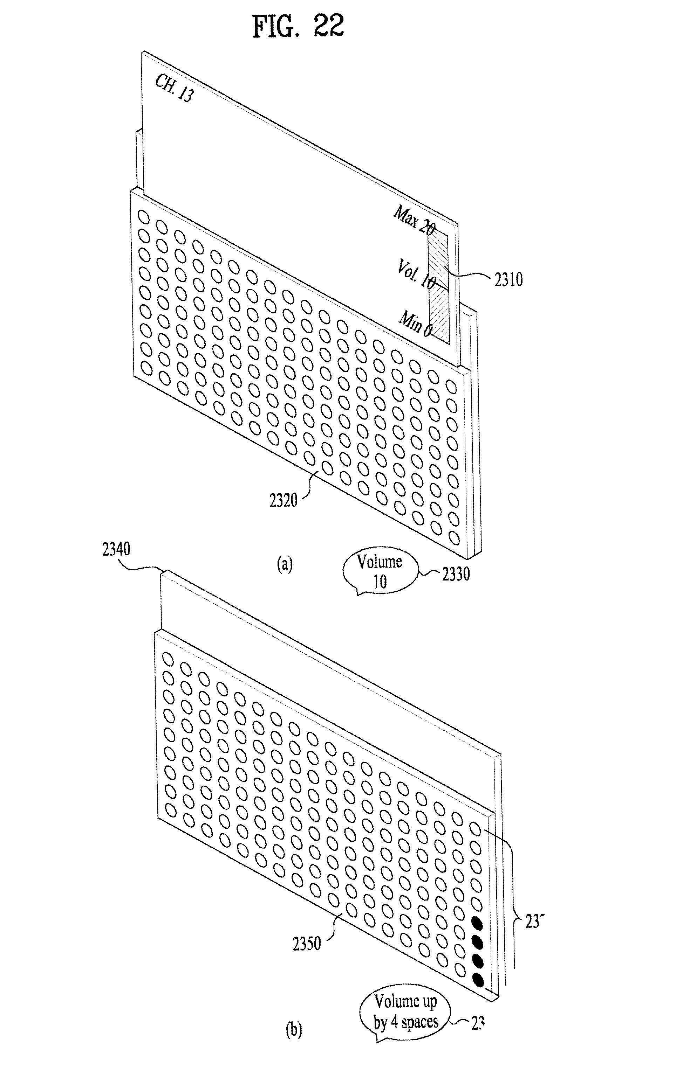

FIG. 22 is a diagram for explaining another voice command set for controlling an option displayed on a screen and an option displayed on a cover, respectively, according to an embodiment of the present disclosure.

As shown in FIG. 22 (a), when a TV screen is fully exposed out of a cover 2320, a TV is designed to operate in response to uttering a numerical level 2330 for adjusting a volume, for example, as a voice command to control an option 2310 displayed on the screen.

On the other hand, as shown in FIG. 22 (b), when a TV screen 2340 is fully or partially covered by a cover 2350, a TV is designed to operate in response to uttering another voice 2360 for adjusting a volume, for example, as a voice command to control an option 2370 displayed on a cover 2350.

In order to implement this, command data and the like for setting a voice command set differently according to a degree of exposure of a TV screen are designed to be pre-stored in memory, which is another feature of the present disclosure.

### MODE FOR DISCLOSURE

Various embodiments of the present disclosure are described in the previous table of contents, "Best Mode", and combining the embodiments described in two or more drawings by those skilled in the art as necessary falls within the scope of the rights of the present disclosure.

### INDUSTRIAL APPLICABILITY

Since the present disclosure is applicable to TVs of various form factors such as rollable TVs and the like, industrial applicability is recognized.

## Claims

1. A method of controlling a TV having an exposed size of a screen changed by a motor, the method comprising:
outputting a content containing at least one of audio data or video data while the screen is covered partially or fully by a cover having at least one Light Emitting Diode (LED);
receiving user's input data or event data externally; and
controlling the at least one LED arranged on the cover based on the received user's input data or event data.

2. The method of claim 1, further comprising, based on the received user's input data related to a specific voice or a specific motion, displaying an option for controlling the audio data or the video data of the content currently outputted on the at least one LED arranged on the cover or the screen.

3. The method of claim 2, wherein at least one of a position, size, or direction for displaying the option is changed depending on the exposed size of the screen.

4. The method of claim 2, the displaying comprising displaying the option in a first direction using the at least one LED arranged on the cover while the screen is fully covered by the cover.

5. The method of claim 4, the displaying comprising displaying the option in a second direction different from the first direction using the at least one LED arranged on the cover while the screen is partially covered by the cover.

6. The method of claim 5, the displaying comprising displaying the option in a same direction as the first direction using the screen while the screen is fully exposed.

7. The method of claim 1, further comprising displaying a lowest line of the screen covered by the cover using the at least one LED while the exposed size of the screen is varied by the motor.

8. The method of claim 1, further comprising recognizing a specific object in the video data.

9. The method of claim 8, further comprising:
displaying a portion of the recognized specific object through the exposed screen; and
displaying a rest of the recognized specific object through the LED of the cover.

10. The method of claim 1, comprising:
based on the received event data related to a broadcast program, displaying an indicator related to the event data through the LED at a first position arranged on the cover; and
based on the received event data related to an external device, displaying an indicator related to the event data through the LED at a second position arranged on the cover,
wherein the first position is located more remotely than the second position based on the exposed screen.

11. A TV having an exposed size of a screen changed by a motor, the TV comprising:
a cover having at least one Light Emitting Diode (LED);
a speaker outputting a content containing audio data while the screen is covered fully or partially;
a receiving module receiving user's input data or event data externally; and
a controller controlling the at least one LED arranged on the cover based on the received user's input data or event data.

12. The TV of claim 11, wherein based on the received user's input data related to a specific voice or a specific motion, the controller controls an option for controlling the audio data or the video data of the content currently outputted to be displayed on the at least one LED arranged on the cover or the screen.

13. The TV of claim 12, wherein at least one of a position, size, or direction for displaying the option is changed depending on the exposed size of the screen.

14. The TV of claim 12, wherein the controller controls the option to be displayed in a first direction using the at least one LED arranged on the cover while the screen is fully covered by the cover.

15. The TV of claim 14, wherein the controller controls the option to be displayed in a second direction different from the first direction using the at least one LED arranged on the cover while the screen is partially covered by the cover.

16. The TV of claim 15, wherein the controller controls the option to be displayed in a same direction as the first direction using the screen while the screen is fully exposed.

17. The TV of claim 11, wherein the controller controls a lowest line of the screen covered by the cover to be displayed using the at least one LED while the exposed size of the screen is varied by the motor.

18. The TV of claim 11, wherein the controller recognizes a specific object in the video data.

19. The TV of claim 18, wherein the controller is configured to display a portion of the recognized specific object through the exposed screen and display a rest of the recognized specific object through the LED of the cover.

20. The TV of claim 11, wherein based on the received event data related to a broadcast program, the controller controls an indicator related to the event data to be displayed through the LED at a first position arranged on the cover, wherein based on the received event data related to an external device, the controller controls an indicator related to the event data to be displayed through the LED at a second position arranged on the cover, and wherein the first position is located more remotely than the second position based on the exposed screen.
